# DEMANDE DE BREVET EUROPEEN

(11) **EP 1 747 846 A1**
(43) Date de publication de la demande: **31.01.2007**
(21) Numéro de dépôt: 05405454.9
(22) Date de dépôt: 25.07.2005
(51) Int. Cl.: B23Q 17/20, B23Q 17/22, B24B 3/26

(54) **Procédé et dispositif de mesure de la géometrie d'une arête de coupe à chanfreiner**

(71) Demandeur: Rollomatic S.A., 2525 Le Landeron (CH)
(72) Inventeur: Fritschy, Patrick, 2525 Le Landeron (CH)
(74) Mandataire: Ganguillet, Cyril

(57) **Abrégé**

L'usinage des forets (1) comporte une opération de chanfreinage des arêtes de coupe (8) effectuée en deux étapes. Dans la première étape la meule (15) en rotation est dirigée vers différents points de l'arête de coupe (8) et le point de contact est détecté par le capteur électronique (17) dont le module électronique (19) commande l'arrêt du déplacement de la meule, son retour vers la position de départ et l'enregistrement de la position de la meule au moment du contact. Dans la seconde étape la meule (15) est commandée de manière à suivre la ligne gauche obtenue en reliant les points enregistrés lors de la première étape.

## Description

Les outils de coupe tels que forets, fraises, notamment fraises hémisphériques, certains burins, etc. doivent répondre à des exigences sans cesse accrues en ce qui concerne leurs performances de précision, de qualité de coupe, de vitesse, de durabilité. Dans certains cas, notamment ceux des forets, l'arête de coupe s'étend selon une courbe définie dans l'espace par la jonction de deux surfaces formant entre elles un angle dièdre assez aigu. Ces outils sont en général usinés par meulage sur des machines CNC. Après usinage l'arête de coupe appaxaît comme une ligne très effilée de sorte que dès les débuts de l'utilisation le risque d'ébréchure est élevé, ce qui constitue un risque d'usure précoce. D'autre part, l'arête de coupe devenant rapidement irrégulière, cela nuit à la qualité des pièces usinées par ces outils. C'est pourquoi il est usuel de retoucher l'extrémité de l'arête de coupe par meulage d'un chanfrein de protection.

Dans le cas des forets notamment, l'arête de coupe est une courbe gauche de forme complexe. Il est bien entendu possible d'obtenir la forme de cette courbe par le calcul. Toutefois, en pratique sa forme réelle diffère sensiblement de la courbe théorique calculée, notamment en raison des imprécisions des opérations de meulage sur les flancs des filets de l'outil. C'est pourquoi, la forme exacte de cette courbe est en pratique déterminée physiquement juste avant l'opération de chanfreinage. La détermination de la forme de cette courbe s'effectue généralement à l'aide d'un couteau-palpeur relié à un interrupteur et monté sur le support d'entraînement de la meule, près de l'axe de cette dernière. On approche ce couteau de l'arête de l'outil à différents endroits de manière à relever une série de points de contact qui sont enregistrés (en général entre 30 et 50 mesures sont effectuées), après quoi la meule est pilotée en fonction des coordonnées des points relevés de manière à retoucher l'arête de coupe par meulage du chanfrein de protection, opération qu'on appelle chanfreinage de l'arête.

Cette façon de procéder s'est toutefois révélée insatisfaisante par son manque de précision, dû notamment aux erreurs générées par le couteau-palpeur lui-même et son mouvement, ainsi que par les complications qu'elle entraîne.

Le but de la présente invention est de proposer un procédé plus efficace que les moyens connus jusqu'à maintenant pour obtenir des arêtes de coupe régulières avec un chanfrein de largeur et d'angle déterminés et de qualité durable.

Dans ce but la présente invention porte sur un procédé de mesure, sur un dispositif pour la mise en oeuvre du procédé et sur l'outil obtenu par le procédé, ces objets étant définis selon les revendications annexées.

On décrit ci-après, à titre d'exemple, une forme de mise en oeuvre du procédé pour le chanfreinage de l'arête de coupe d'un foret, en se référant aux dessins annexés dont :
La fig. 1 est une vue en perspective à grande échelle des parties de coupe de l'extrémité du foret,
La fig. 2 est une vue en bout de l'extrémité du foret de la fig. 1,
La fig. 3 est une vue en élévation latérale du foret montrant les positions de points de palpage, et
La fig. 4 est une vue schématique montrant les éléments essentiels du dispositif d'usinage permettant la mise en oeuvre du procédé.

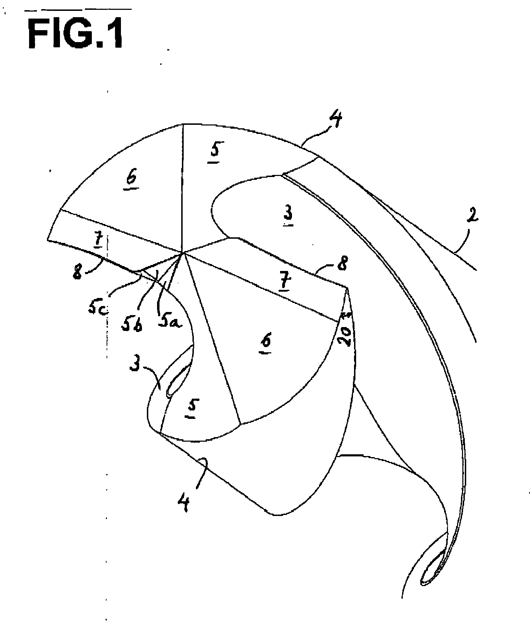

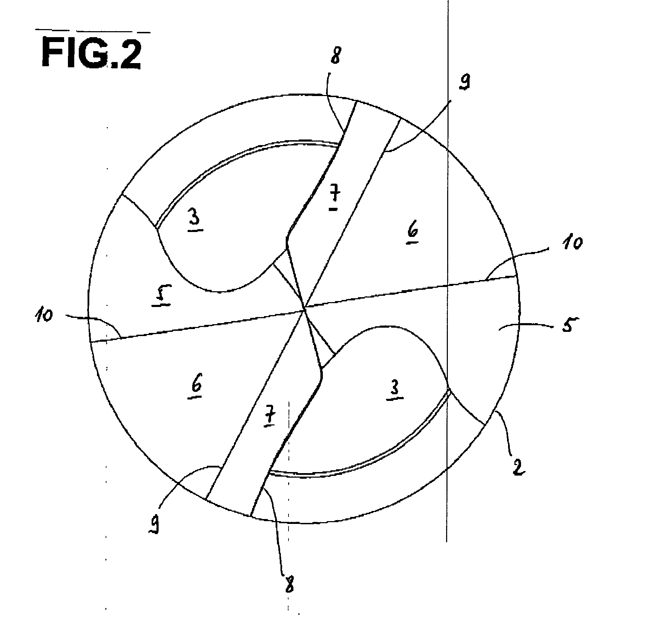

On voit aux fig. 1 et 2 les détails de forme d'un foret 1, destiné par exemple au perçage d'aciers tenaces. Il présente une face latérale cylindrique 2 dans laquelle sont ménagées deux gorges hélicoïdales 3 diamétralement opposées, s'étendant jusqu' à l'extrémité active de l'outil. Ces gorges déterminent entre elles deux filets 4 dont la largeur dans le sens axial est constante jusqu'au voisinage de l'extrémité active de l'outil, mais se réduit par étapes en s'approchant du sommet par la présence de trois rampes successives 5, 6, 7 ménagées sur le flanc arrière des filets 4. La dernière rampe 7 rejoint le flanc antérieur du filet selon une ligne d'arête gauche 8 décrite en détail plus loin. Les inclinaisons et les longueurs des rampes 5, 6, 7 sont déterminées en fonction des performances désirées pour le foret. En fait comme on le voit à la fig. 2, les deux arêtes 9 qui séparent chaque rampe 7 de la rampe 6 adjacente sont rectilignes, diamétralement opposées et déterminent dans le plan diamétral du foret un angle obtus caractéristique de l'outil. Les deux arêtes 10 entre les rampes 5 et 6 sont dans le même cas.

Quant aux arêtes 8 limitant les rampes 7, on voit qu'elles s'étendent selon des lignes dans l'espace 3D à partir du sommet du foret jusqu'au flanc cylindrique 2 en nécessitant la présence de rampes auxiliaires 5a, 5b, 5c entre chaque rampe 5 et la rampe opposée 7. Le tracé de chacune des lignes d'arête 8 est donc complexe. Il résulte de la jonction de surfaces gauches faisant entre elles un angle dièdre 20 aigu, de sorte que ces lignes sont très acérées et présentent un haut risque d'effilochage en service.

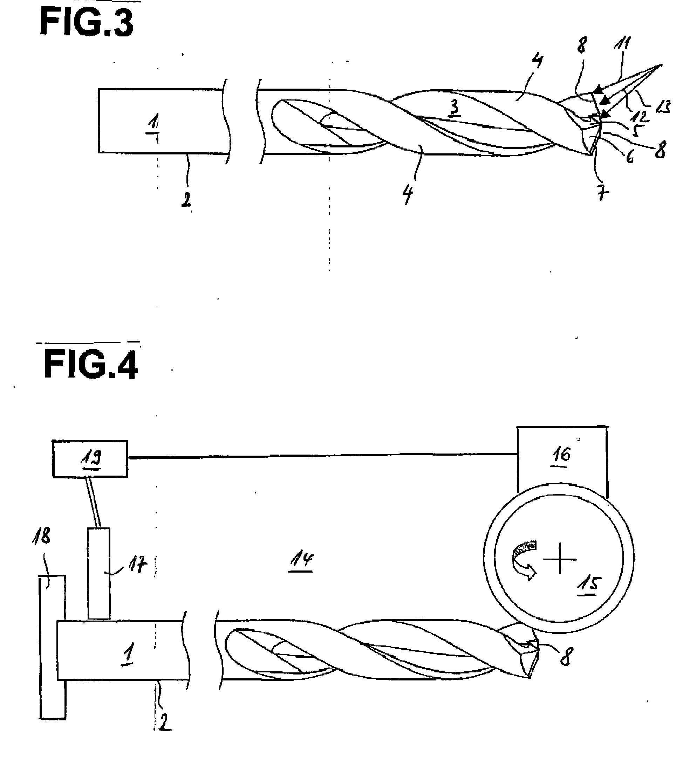

Pour éviter cet inconvénient il est prévu, lors de l'usinage des forets, une opération supplémentaire de chanfreinage des lignes 8 dont une première étape, de palpage, consiste a relever et enregistrer les positions exactes d'un certain nombre de points, par exemple entre trente et cinquante, répartis le long des lignes d'arête 8. Ainsi la fig. 3 indique schématiquement les positions de trois points 11, 12, 13 espacés le long de l'arête 8 et dont les coordonnées sont mesurées et enregistrées.

Cette opération est effectuée sur la machine CNC 14 de meulage des outils en utilisant la meule 15 montée sur son support 16. Un foret 1 avec son arête à chanfreiner est fixé dans le porte-pièce 18 de la machine, dans une position fixe ou susceptible d'être déplacée en rotation. Un détecteur de contact 17, qui dans l'exemple décrit est un détecteur électronique d'ultrasons, est placé dans une position convenable à proximité du foret, après quoi la meule 16 est commandée tout en étant en rotation de manière à s'approcher de la ligne d'arête 8 dans différentes directions comme indiqué à la fig. 3. Dès que le contact a lieu, le détecteur 17 enregistre dans le dispositif électronique 19 la position de la meule et commande le recul de celle-ci. Ainsi le tracé de la courbe 8 dans l'espace est établi et il ne reste plus ensuite qu'à ordonner à la meule de le suivre tel qu'enregistré pour effectuer l'opération de chanfreinage. Une surface terminale très étroite mais régulière est ainsi formée sur l'extrémité de chacun des filets 4. Cette surface s'étend en continu puisqu'elle est réalisée par une opération de meulage commandée numériquement depuis le sommet de l'outil, point de contact des rampes 5, 6, 7, entre les rampes 7 d'une part et lés rampes 5b, 5c, et le flanc antérieur du filet 4 déterminé par la gorge 3 d'autre part, jusqu'à la face latérale cylindrique 2 de la tige de l'outil.

La détermination de la forme de l'arête de coupe par palpage à l'aide de la meule en rotation qui effectue elle-même ensuite le chanfreinage est particulièrement avantageuse par rapport à la méthode traditionnelle utilisant un couteau palpeur. En effet, lors du palpage, la meule entre en contact avec l'arête de coupe aux mêmes points que lorsqu'elle va effectuer ensuite le chanfreinage. Ceci élimine les erreurs de calibrage de la machine. De plus, du fait que la meule doit nécessairement déjà être en rotation lors du palpage, le mal rond de la meule est pris en considération.

Les expériences effectuées avec cette méthode ont montré que les forets étaient produits plus rapidement que jusque là, que leur précision et leur durabilité étaient supérieures et que les coûts de production étaient abaissés.

Les mêmes avantages s'obtiennent également avec des forets de différentes dimensions ou avec un plus grand nombre de goujures et avec d'autres types d'outils, comme des fraises, des burins, des alésoirs, etc.

Pour la détection du contact de la meule avec l'arête de coupe, on peut prévoir différents types de détecteurs capables de détecter les vibrations ou ultrasons générés par le contact de la meule en rotation avec l'arête de coupe. Outre le détecteur à ultrasons représenté, des détecteurs piézo-électriques ou à courants de Foucault permettent aussi d'effectuer l'opération de palpage décrite.

## Revendications

1. Procédé de mesure de la géométrie d'une arête de coupe (8) d'un outil en vue du chanfreinage de cette arête par une opération de meulage commandée automatiquement, procédé comportant la détection et l'enregistrement des positions de points (11, 12, 13 ) voisins le long de l'arête de manière à permettre une commande programmée des déplacements de la meule (15) le long de la dite arête, **caractérisé en ce qu'**un détecteur de contact (17) est associé à la meule, **en ce que** celle-ci, tout en étant en rotation, est d'abord déplacée en direction de l'arête (8) selon des lignes coupant l'arête aux dits points voisins, le détecteur stoppant le mouvement dès que le contact est détecté et les positions atteintes étant enregistrées, et **en ce que** la dite meule (15) est ensuite commandée selon les enregistrements desdites positions pour effectuer le chanfreinage de l'arête.

2. Dispositif pour la mise en oeuvre du procédé selon la revendication 1, **caractérisé en ce qu'**il comporte sur une machine de meulage CNC (14) équipée pour l'usinage d'arêtes de coupe d'outils, un support de meule (16) avec un détecteur de contact (17) associé et des moyens d'enregistrement et de commande (19, 16) pour effectuer dans une première étape le palpage par la meule (15) en rotation d'une série de points le long d'une arête de coupe (8) de l'outil et l'enregistrement des positions de la meule correspondant aux points de contacts palpés puis dans une seconde étape la commande de la meule (15) de manière à chanfreiner l'arête de coupe (8) en fonction des positions palpées.

3. Dispositif selon la revendication 2, **caractérisé en ce que** le détecteur de contact (17) est un détecteur à ultrasons placé à proximité de la tige (1) de l'outil.

4. Dispositif selon la revendication 2, **caractérisé en ce que** le détecteur de contact (17) est un capteur à courant de Foucault.

5. Dispositif selon la revendication 2, **caractérisé en ce que** le détecteur de contact (17) est un capteur piézoélectrique.

6. Outil, notamment foret (1), obtenu avec le procédé de la revendication 1, **caractérisé en ce qu'**il comporte au moins une arête de coupe (8) chanfreinée selon une courbe gauche par meulage.

7. Outil selon la revendication 6, **caractérisé en ce que** la dite arête de coupe (8) s'étend en continu depuis le sommet de l'outil (1) jusqu' à sa face latérale cylindrique (2) entre des surfaces (7, 3, 5c, 5b) faisant entre elles des angles dièdres différents.
